# EUROPEAN PATENT SPECIFICATION

(11) **EP 0 512 738 B1**
(45) Date of publication and mention of the grant of the patent: **22.01.1997**
(21) Application number: 92303853.3
(22) Date of filing: 29.04.1992
(51) Int. Cl.: A01N 43/90

(54) **Herbicidal compositions with increased crop safety**
Herbizide Zusammensetzungen mit verbesserter Getreide-Sicherheit
Compositions herbicides avec sûreté améliorée pour les récoltes

(30) Priority: 03.05.1991 US 695193
(43) Date of publication of application: 11.11.1992
(73) Proprietor: DOWELANCO, Indianapolis, Indiana 46268-1189 (US)
(72) Inventor: Noveroske, Robert L., Midland, MI 48640 (US)
(74) Representative: Raynor, John

(56) References cited:
- EP-A- 0 124 295
- EP-A- 0 142 152
- EP-A- 0 303 383
- US-A- 4 910 306

## Description

### FIELD OF THE INVENTION

The present invention is directed to corn and sorghum selective pre- and post-emergent herbicidal concentrate formulation compositions comprising N-(2,6-difluorophenyl)-5-methyl-1,2,4-triazolo-(1,5-a)-pyrimidine-2-sulfonamide or an amine salt thereof in admixture with one or more amine salts of 2,4-D; the preparation of said concentrates and the pre- and post-emergent agricultural uses of said concentrates in water diluted form.

### BACKGROUND OF THE INVENTION

Various herbicides, such as, for example, those of the sulfonamide classes are known to be active as selective pre- and post-emergent weed control agents. Many times when certain of these compounds are employed at the dosage rates usually necessary for the control of many of the broadleaf and/or grassy weeds, serious loss of some sensitive broadleaf and/or grassy crop plants occur.

One procedure to overcome the above indicated sensitivity responses of plants to the various herbicidal compounds involves varying the dosage rate. When a reduction in the dosage rate is used to avoid phytotoxicity to the crop plants, reduced weed control is often the result.

Another procedure involves changing the time of application or modifying the ingredients used in the formulations containing the active compound. Other known procedures include treatment of the seeds of the crop plants with an agent antagonistic to the herbicide prior to planting as described in U.S. Patent 3,131,509.

It has now been found that the post-emergent phytotoxicity of the herbicide N-(2,6-difluorophenyl)-5-methyl-1,2,4-triazolo-(1,5-a)pyrimidine-2-sulfonamide toward grass crop plants is reduced by admixing said herbicide with one or more amine salts of 2,4-D in an amount sufficient to maintain the pH of the mixture above 6 and up to 12. It has further been discovered that esters of 2,4-D do not offer the same protection to the crop plants as afforded by the amine salts.

### DESCRIPTION OF KNOWN PRIOR ART

U.S. Patent 4,127,405 is directed to certain sulfonamides/sulfonylureas and their use as selective herbicides. It is further indicated that the claimed compounds can be used in combination with other herbicides and 2,4-D and closely related compounds being listed.

U.S. Patent 4,547,215 is directed to certain sulfonamides/sulfonylureas and their use as selective pre-or post-emergent herbicides. It is further indicated that the claimed compounds can be used in combination with other herbicides and 2,4-D is listed.

U.S. Patent 4,840,663 teaches the control of weeds in rice by the use of a synergistic mixture of N-(2-(2-methoxyethoxy)phenylsulfonyl)-N'-(4,6-dimethoxy-1,3,5-triazin-2-yl)urea and a herbicidal compound selected from a large grouping of different types of herbicides. One of the grouping includes 2,4-D.

U.S. Patent 4,936,900 is directed to stabilized compositions having a pH of 6-10 and containing a mixture of a sulfonylurea or one of its agriculturally suitable salts with a salt or mixture of salts of a carboxylic or inorganic acid. It is further indicated that other herbicides may be added to the mixture and a very large list of other herbicides which may be added is set forth which includes, for example, 2,4-D and its agriculturally suitable salts and esters. It is noted that in this patent the pH is maintained by a material other than the agricultural suitable salts and esters of 2,4-D.

EP-A-142152 teaches that substituted 1,2,4-triazolo-(1,5-a)-pyrimidine-2-sulfonamides and compositions are effective herbicides which act to suppress the nitrification of ammonium nitrogen in soil. N-(2,6-difluorophenyl)-5-methyl-1,2,4-triazolo-(1,5-a)-pyrimidine-2-sulfonamide is prepared as an example of one such compound; and 2,4-D is mentioned as a suitable complementary pesticide. There is, however, no mention of a toxicity problem towards crop plants, nor is there any selection of the sulphonamide of the present application in combination with the amine salts of 2,4-D.

### SUMMARY OF THE INVENTION

The present invention is directed to herbicidal concentrate compositions containing N-(2,6-difluorophenyl)-5-methyl-1,2,4-triazolo-(1,5-a)-pyrimidine-2-sulfonamide in admixture with one or more amine salts of 2,4-D in an amount sufficient to maintain the pH of the mixture above 6 and up to 12. The pH is preferably controlled solely by the amine salt of 2,4-D. The invention is also directed to the preparation of said concentrates, aqueous formulations prepared from said concentrates and the agricultural uses of the thus prepared formulations by applying herbicidally effective amounts of said formulations to plants or their habitat in the pre- and post-emergent kill and control of the weeds present in barley, corn, sorghum and wheat crops.

### DESCRIPTION OF SOME PREFERRED EMBODIMENTS

The compositions of the present invention have been found to possess desirable herbicidal activity for use in the post-emergent control of many broadleaf weeds such as velvetleaf, lambsquarter, cocklebur, and buckwheat while showing high selectivity towards barley, corn, sorghum and wheat crop plants.

The amine salts of 2,4-D and the active material found usable in the practice of the present invention are preferably
mono-, di- and tri-C₁-C₄ alkylamine salts of 2,4-D; and
mono-, di- and tri-C₁-C₄ alkanolamine salts of 2,4-D.
Both of the above groups of amine salts, are well known herbicides, many of which can be found in general commerce. Representatives of said salts include the methylamine, dimethylamine, trimethylamine, ethylamine, diethylamine, triethylamine, *n*-propylamine, di-*n*-propylamine, tri-*n*-propylamine, tri-*i*-propylamine, *n*-butylamine, di-*n*-butylamine, tri-*n*-butylamine, ethanolamine, diethanolamine, triethanolamine and tri-*i*-propanolamine salts.

The amount of N-(2,6-difluorophenyl)-5-methyl-1,2,4-triazolo-(1,5a)-pyrimidine-2-sulfonamide or amine salt thereof present in the concentrate composition is generally from 0.05 to 90 percent by weight or more based on the concentrate. Concentrations from about 2 to about 50 percent by weight are often preferred. The amount of said herbicide present in the final treating composition (mixture) is usually sufficient to provide during post-emergent control of broadleafed weeds from about 1.0 to about 70.0 grams of the said active material per hectare, preferably from about 2.0 to about 35 grams of the said active material per hectare; for pre-emergent control of broadleafed weeds, the active herbicide is provided in an amount of about 10 to about 200 g ai/hectare.

The amount of amine salt of 2,4-D present in the concentrate composition generally is from about 0.5 to about 80 percent by weight of more, based on the concentrate. The amount of the amine salt present in the final treating composition (mixture) is sufficient to maintain the pH of the mixture above 6.0 and usually from about pH 6.0 to about 10 and is usually present in an amount sufficient to provide during application, from about 20 to about 2000 grams per hectare.

It is frequently desirable to incorporate a surface active agent in the composition of the present invention. Such surface active or wetting agents can be anionic, cationic or nonionic in character. A suitable list for reference may be found in "McCutcheon's Emulsifiers and Detergents" (1981 Edition).

Examples of anionic surfactants are the calcium and amine salts of dodecylbenzene sulfonic acid and sodium diisooctylsulfosuccinate.

Examples of nonionic surfactants are the condensation products of fatty acid esters, fatty alcohols, fatty acid amides or fatty amines with ethylene and/or propylene oxide, alkyl, alkenyl, or polyaryl-substituted phenols with ethylene and/or propylene oxide, fatty esters of polyhydric alcohol ethers, e.g., sorbitan fatty acid esters, condensation products of such esters with ethylene oxide, e.g., polyoxyethylene sorbitan fatty acid esters, block copolymers of ethylene oxide and propylene oxide, ethoxylated lanolin alcohols or ethoxylated lanolin acids.

Representative of the above surface active or wetting agents useful in the practice of the present invention include products such as, for example:
- PG 26-2:: a secondary butyl(((phenoxy-(polypropylene)oxy)polyethylene)oxy) ethanol (5 moles EO,4 moles PO) a product of The Dow Chemical Co.
- Triton (Ortho) X-77:: alkylarylpolyoxyethylene glycol, a product of Chevron Chemical Co.
- Silwet L-77:: nonionic silicone glycol copolymer; a product of Union Carbide Corp.

Examples of a cationic agent include, for instance, an aliphatic mono-, di- or polyamine as an acetate or oleate.

Anionic/nonionic blends are preferred and are often advantageously chosen as pre-blended systems for ease of handling, reproducibility and cost effectiveness.

The choice of suitable surfactants to achieve this is well within the capabilities of one skilled in the art.

The amount of surfactant present in the concentrate composition will generally be in the range of from about 0.0 percent to about 10 percent, preferably from 1.0 percent to 7.0 percent by weight. The amount of surfactant present in the final treating composition (mixture) is usually from about 0.0 to about 5.0 percent by weight, preferably from 0.0 percent to 0.5 percent by weight.

In the agricultural uses set forth hereinabove, the present invention also embraces the employment of the present herbicides in combination with one or more additional pesticidal compounds. Such additional pesticidal compounds may be other types of herbicides, insecticides, nematocides, miticides, arthropodicides, fungicides or bactericides that are compatible with the compounds of the present invention in the aqueous medium used for application and which are not antagonistic to the activity of the compounds employed in the present concentrate. Accordingly, in such embodiments, the additional pesticidal compound(s) is employed as a supplemental toxicant or as an additament. The added compounds in combination with the compounds of the concentrate can generally be present in a ratio of from 1 to 100 parts of the compounds of concentrate of the present invention with from 100 to 1 part of the additional compound.

The exact herbicidally effective amount of the composition to be applied is dependent not only on the specific active ingredient contained therein, but also on the particular action desired, the plant species to be controlled, the stage of growth thereof as well as the specific part of the plant to be contacted.

The following examples illustrate the present invention and the manner by which it can be practiced but, as such, should not be construed as limitations upon the overall scope of the same. In addition, the pH value given is taken from the run with the highest 2,4-D amine concentration and the pH of all runs is greater than 6.0.

### Example I:

Representative compositions of the present invention were evaluated to determine their phytotoxicity effect in post-emergent operations on corn plants.

Aqueous dispersions containing N-(2,6-difluorophenyl)-5-methyl-1,2,4-triazolo-(1,5-a)pyrimidine-2-sulfonamide, as the active ingredient, were prepared by admixing a predetermined amount of the compound with a predetermined quantity of water, a predetermined amount of a 50:50 mixture of the dimethylamine salt of 2,4-D and tri-*i*-propanolamine salt of 2,4-D and a predetermined amount of the surfactant X-77 to give aqueous dispersions containing varying amounts of the compound, as the sole toxicant.

Corn seeds were planted in beds of good agricultural peat based soil and grown in a greenhouse. After the plants had emerged and had grown to a height of about 4 inches, separate beds of the plants were sprayed with one of the above-prepared compositions at a predetermined treating rate in grams of the active ingredient per hectare (g ai/ha). Other beds were treated only with a water-surfactant mixture, containing no active compound, and others containing the active compound and surfactant, but no amine salt, to serve as controls. After treatment, the beds were maintained for seven days under greenhouse conditions conducive for good plant growth. At the end of this period, the beds were examined to determine the percentage of phytotoxicity to the corn plants. The results of these examinations are set forth below in Table I.

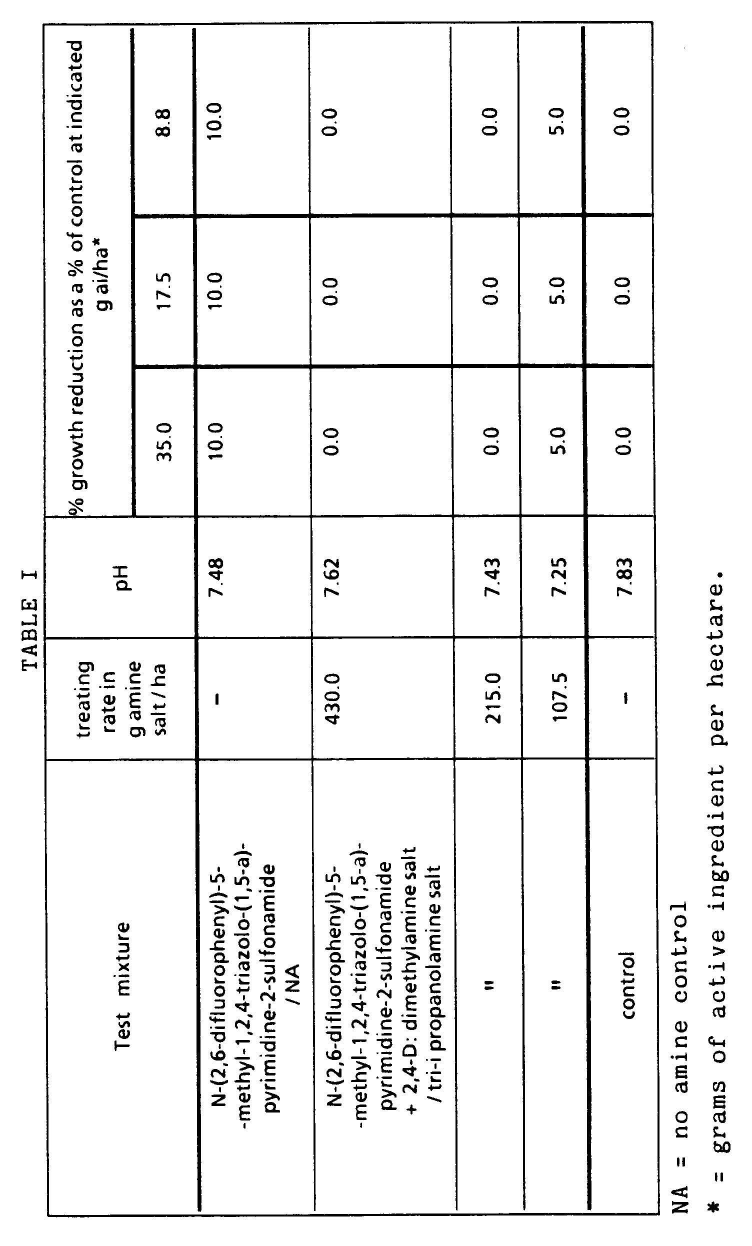

### Example II:

Representative compositions of the present invention were evaluated to determine their phytotoxicity effect in post-emergent operations on sorghum plants.

Aqueous dispersions containing N-(2,6-difluorophenyl)-5-methyl-1,2,4-triazolo-(1,5-a)-pyrimidine-2-sulfonamide, as the active ingredient, were prepared by admixing a predetermined amount of the compound with a predetermined quantity of water, a predetermined amount of a 50:50 mixture of the dimethylamine salt of 2,4-D and tri-*i*-propanolamine salt of 2,4-D and a predetermined amount of the surfactant X-77 to give aqueous dispersions containing varying amounts of the compound, as the sole toxicant.

Sorghum was planted in beds of good agricultural peat based soil and grown in a greenhouse. After the plants had grown to a height of about 3-4 inches, separate beds of the plants were sprayed with one of the above-prepared compositions at a predetermined treating rate in grams of the active ingredient per hectare (g ai/ha). Other beds were treated only with a water-surfactant mixture, containing no active compound, and others containing the active compound and surfactant, but no amine, to serve as controls. After treatment, the beds were maintained for 13 days under greenhouse conditions conducive for good plant growth. At the end of this period, the beds were examined to determine the percentage of phytotoxicity to the sorghum plants. The results of these examinations are set forth below in Table II.

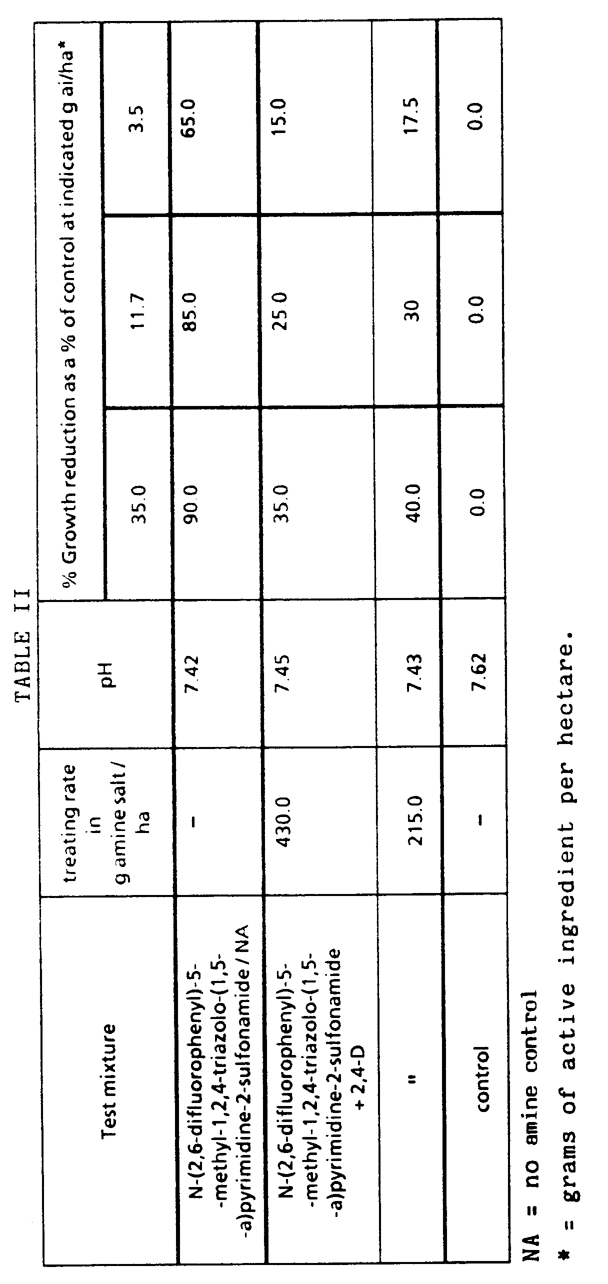

### Example III:

Representative compositions of the present invention were evaluated to determine their phytotoxicity effect in post-emergent operations on sorghum plants.

Aqueous dispersions containing N-(2,6-difluorophenyl)-5-methyl-1,2,4-triazolo-(1,5-a)-pyrimidine-2-sulfonamide, as the active ingredient, were prepared by admixing a predetermined amount of the compound with a predetermined quantity of water, a predetermined amount of a 50:50 mixture of the dimethylamine salt of 2,4-D and tri-*i*-propanolamine salt of 2,4-D and a predetermined amount of the surfactant X-77 to give aqueous dispersions containing varying amounts of the compound, as the sole toxicant.

Sorghum was planted in beds of good agricultural peat based soil and grown in a greenhouse. After the plants had grown to a height of about 3-4 inches, separate beds of the plants were sprayed with one of the above-prepared compositions at a predetermined treating rate in grams of the active ingredient per hectare (g ai/ha). Other beds were treated only with a water-surfactant mixture, containing no active compound, and others containing the active compound and surfactant, but no amine, to serve as controls. After treatment, the beds were maintained for five days under greenhouse conditions conducive for good plant growth. At the end of this period, the beds were examined to determine the percentage of phytotoxicity to the sorghum plants. The results of these examinations are set forth below in Table III.

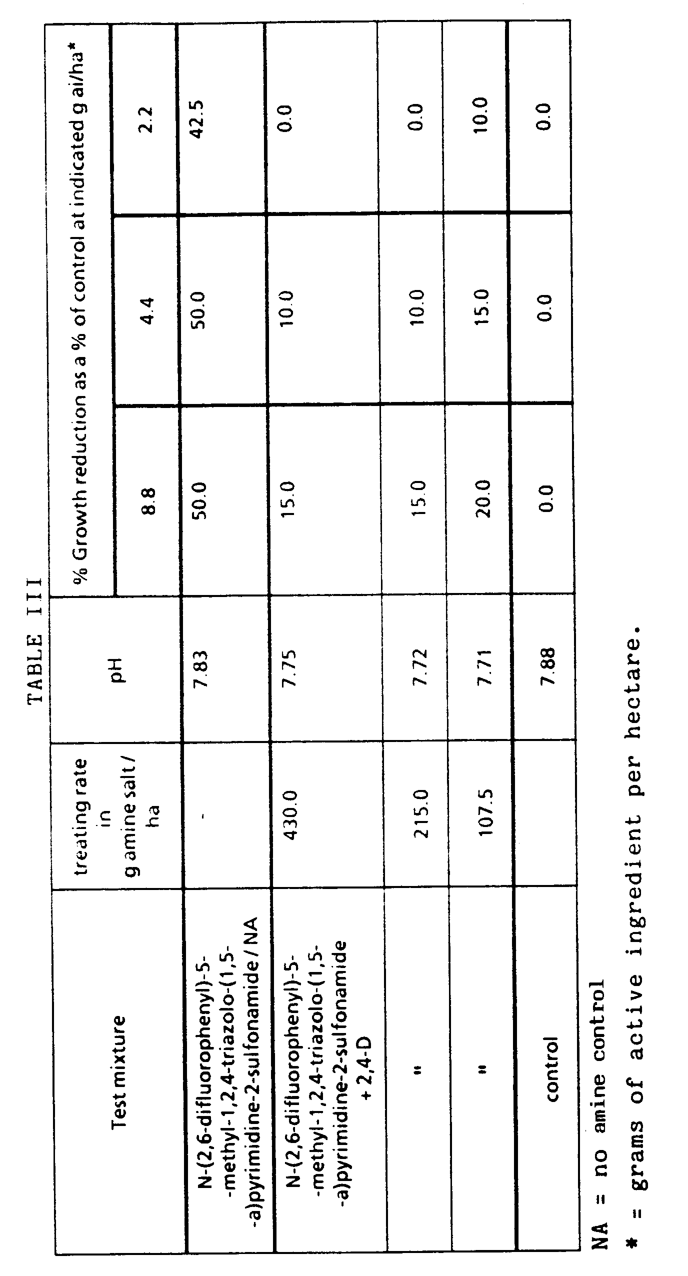

## Claims

1. A herbicidal composition comprising N-(2,6-difluorophenyl)-5-methyl-1,2,4-triazolo-(1,5-a)-pyrimidine-2-sulfonamide or an amine salt thereof together with an amine salt of 2,4-D acid, wherein the said sulfonamide and the said amine salt are present in relative amounts such that a corresponding ratio of the same compounds dissolved in water of pH 7 would produce an aqueous composition having a pH of more than 6, and up to 12.

2. A composition as claimed in Claim 1, which is an aqueous composition having a pH of above 6.0 and up to 12.

3. A composition as claimed in Claim 1 or Claim 2, wherein the amine salt is a mono-, di- or tri-C₁-C₄ alkylamine salt of 2,4-D, a mono-, di- or tri-C₁-C₄ alkanolamine salt of 2,4-D, or a mixture of two amine salts comprising at least one of the said salts.

4. A composition as claimed in Claim 3, wherein the amine salt is the dimethylamine salt, the trimethylamine salt, the tri-*i*-propylamine salt, the diethanolamine salt, or the tri-*i*-propanolamine salt of 2,4-D, or a mixture of two amine salts comprising at least one of the said salts.

5. A composition as claimed in Claim 4, which comprises a mixture of amine salts of 2,4-D acid, of which at least one is a salt as defined in Claim 3.

6. A composition as claimed in any one of the preceding claims, in the form of an aqueous concentrate.

7. A composition as claimed in any one of the preceding claims, in the form of a dilute composition suitable for application to broadleaf weeds growing in the presence of crop plants.

8. A method for the control of broadleaf weeds growing in the presence of grassy crop plants which comprises contacting said plants or their habitat with a herbicidally effective amount of a composition as claimed in Claim 7.

## Patentansprüche

1. Herbizid-Zusammensetzung, umfassend N-(2,6-Difluorphenyl)-5-methyl-1,2,4-triazol-(1,5-a)-pyrimidin-2-sulfonamid oder ein Aminsalz davon zusammen mit einem Aminsalz von 2,4-D Säure, worin das Sulfonamid und das Aminsalz in relativen Mengen vorliegen, so daß ein entsprechendes Verhältnis der gleichen, in Wasser mit pH 7 gelösten Verbindungen eine wäßrige Zusammensetzung erzeugen würde, die einen pH von mehr als 6 und bis zu 12 aufweist.

2. Zusammensetzung nach Anspruch 1, welche eine wäßrige Zusammensetzung mit einem pH-Wert von über 6,0 und bis zu 12 ist.

3. Zusammensetzung nach Anspruch 1 oder 2, worin das Aminsalz ein mono-, di- oder tri-C₁-C₄-Alkylaminsalz von 2,4-D, ein mono-, di- oder tri-C₁-C₄-Alkanolaminsalz von 2,4-D oder ein Gemisch von zwei Aminsalzen, umfassend mindestens eines dieser Salze ist.

4. Zusammensetzung nach Anspruch 3, worin das Aminsalz das Dimethylaminsalz, das Trimethylaminsalz, das tri-i-Propylaminsalz, das Diethanolaminsalz oder das tri-i-Propanolaminsalz von 2,4-D oder ein Gemisch von zwei Aminsalzen umfassend mindestens eines dieser Salze ist.

5. Zusammensetzung nach Anspruch 4, welche ein Gemisch von Aminsalzen von 2,4-D Säure umfaßt, von denen mindestens eines ein Salz, wie in Anspruch 3 festgelegt, ist.

6. Zusammensetzung nach einem der vorhergehenden Ansprüche, in Form eines wäßrigen Konzentrats.

7. Zusammensetzung nach einem der vorhergehenden Ansprüche in Form einer verdünnten Zusammensetzung geeignet zur Anwendung auf breitblättrige Unkräuter, die in Gegenwart von Getreidepflanzen wachsen.

8. Verfahren zur Bekämpfung von breitblättrigen Unkräutern, die in Gegenwart von grasartigen Getreidepflanzen wachsen, welches Inkontaktbringen der Pflanzen oder ihres Lebensraumes mit einer herbizid-wirksamen Menge einer Zusammensetzung nach Anspruch 7 umfaßt.

## Revendications

1. Composition herbicide contenant du N-(2,6-difluorophényl-5-méthyl-1,2,4-triazolo[1,5-a]pyrimidine-2-sulfonamide ou de l'un de ses sels d'amine, conjointement avec un sel d'amine de l'acide 2,4-D, dans laquelle composition ledit sulfonamide et ledit sel d'amine se trouvent en des proportions telles que ces mêmes composés, dissous en un rapport correspondant dans de l'eau à pH 7, donneraient une composition aqueuse dont le pH serait supérieur 6 et inférieur ou égal à 12.

2. Composition conforme à la revendication 1, qui est une composition aqueuse dont le pH est supérieur 6,0 et inférieur ou égal à 12.

3. Composition conforme à la revendication 1 ou 2, dans laquelle le sel d'amine est un sel de mono-, di- ou tri-(alkyle en C₁₋₄)-amine et de 2,4-D, un sel de mono-, di- ou tri-(alcanol en C₁₋₄)-amine et de 2,4-D, ou un mélange de deux sels d'amine contenant au moins l'un de ces sels.

4. Composition conforme à la revendication 3, dans laquelle le sel d'amine est le sel de diméthylamine, le sel de triméthylamine, le sel de tri-isopropylamine, le sel de diéthanolamine ou le sel de tri-isopropanolamine de 2,4-D, ou un mélange de deux sels d'amine contenant au moins l'un de ces sels.

5. Composition conforme à la revendication 4, qui contient un mélange de sels d'amine de l'acide 2,4-D, au moins l'un de ces sels étant un sel défini dans la revendication 3.

6. Composition conforme à l'une des revendications précédentes, qui se présente sous la forme d'un concentré aqueux.

7. Composition conforme à l'une des revendications précédentes, qui se présente sous la forme d'une composition diluée appropriée pour être appliquée sur des mauvaises herbes à larges feuilles qui poussent en présence de plantes cultivées.

8. Procédé de lutte contre des mauvaises herbes à larges feuilles qui poussent en présence de plantes herbacées cultivées, lequel procédé comporte le fait de mettre ces plantes ou leur environnement en contact avec une certaine dose, efficace en tant qu'herbicide, d'une composition conforme à la revendication 7.
